# EUROPEAN PATENT APPLICATION

(11) **EP 4 019 861 A1**
(43) Date of publication of application: **29.06.2022**
(21) Application number: 20873121.6
(22) Date of filing: 29.09.2020
(51) Int. Cl.: F25B 7/00, F25B 1/00

(54) **AIR CONDITIONING APPARATUS**

(30) Priority: 30.09.2019 JP 2019180815
(71) Applicant: Daikin Industries, Ltd., Osaka-shi, Osaka 530-8323 (JP)
(72) Inventor: YOSHIMI, Atsushi, Osaka-shi, Osaka 530-8323 (JP); KUMAKURA, Eiji, Osaka-shi, Osaka 530-8323 (JP); IWATA, Ikuhiro, Osaka-shi, Osaka 530-8323 (JP); MIYAZAKI, Takeru, Osaka-shi, Osaka 530-8323 (JP); YAMADA, Takuro, Osaka-shi, Osaka 530-8323 (JP); YAMANOI, Yoshiki, Osaka-shi, Osaka 530-8323 (JP); IYOSHI, Yuuta, Osaka-shi, Osaka 530-8323 (JP)
(74) Representative: Hoffmann Eitle
(86) International application number: PCT/JP2020/036998
(87) International publication number: WO 2021/065944

(57) **Abstract**

An air conditioning apparatus (1) is an air conditioning apparatus dedicated to cooling and including a first circuit (C1) and a second circuit (C2). The first circuit (C1) has an outdoor heat exchanger (12) that cools a first refrigerant by outdoor air. In the second circuit (C2), a first heat transfer medium that is cooled by exchanging heat with the first refrigerant that flows in the first circuit (C1) flows. The first refrigerant is a HFO refrigerant having a critical temperature higher than that of R32.

## Description

### TECHNICAL FIELD

The present disclosure relates to an air conditioning apparatus.

### BACKGROUND ART

As disclosed in PTL 1 (International Publication No. 2015/083834), it is required to use a refrigerant having a low GWP (global warming potential) to reduce an influence of air conditioning apparatuses on global warming.

### SUMMARY OF THE INVENTION

### <Technical Problem>

The technology disclosed in PTL 1 addresses a problem of providing a refrigerant having an excellent cooling COP (coefficient of performance) compared with R410A, which is an alternative refrigerant of R22, and having an excellent or equivalent refrigerating effect compared with R22, even under a use condition such as under a high outside air temperature with which a high condensation temperature is set. To cope with this problem, a mixture refrigerant composition containing HFC 32, HFC125, and HFC134a at a predetermined mass ratio is used.

In PTL 1, a study is made on R22 as a reference. The present inventors used R32, which has higher performance than R22, as a reference.

### <Solution to Problem>

An air conditioning apparatus according to a first aspect is an air conditioning apparatus dedicated to cooling and including a first circuit and a second circuit. The first circuit has an outdoor heat exchanger that cools a first refrigerant by outdoor air. In the second circuit, a first heat transfer medium that is cooled by exchanging heat with the first refrigerant that flows in the first circuit flows. The first refrigerant is a HFO refrigerant having a critical temperature higher than that of R32.

The present inventors have made intensive studies on using R32, which has higher performance than R22, as a reference and realizing an air conditioning apparatus that uses a refrigerant having a low GWP and that is usable under a high outside air temperature. As a result, the present inventors conceived of an idea of using a HFO refrigerant having a critical temperature higher than that of R32, as a refrigerant that flows in a first circuit on the high temperature side in an air conditioning apparatus having the first circuit on the high temperature side and a second circuit on the low temperature side. It is possible to reduce the GWP by using the HFO refrigerant having a critical temperature higher than that of R32, as the refrigerant that flows in the first circuit on the high temperature side. However, the pressure of the HFO refrigerant having a critical temperature higher than that of R32 decreases when the outside air (outdoor air) temperature decreases. This may cause the pressure inside the first circuit to become a negative pressure with respect to the pressure outside the first circuit. To address such a problem that the pressure inside the first circuit may become a negative pressure, the present inventors considered that, as the first refrigerant that flows in the first circuit on the high temperature side, the HFO refrigerant having a critical temperature higher than that of R32 is not suitable for heating operation and conceived of using the HFO refrigerant in an air conditioning apparatus dedicated to cooling used under a high outside air temperature. Therefore, the air conditioning apparatus according to the present disclosure can reduce the GWP and can be used under a high outside air temperature.

An air conditioning apparatus according to a second aspect is the air conditioning apparatus according to the first aspect further including a third circuit in which a second refrigerant or a second heat transfer medium that is cooled by exchanging heat with the first heat transfer medium that flows in the second circuit flows.

The air conditioning apparatus according to the second aspect includes a ternary refrigerant circuit in which a circuit on the heat source side is constituted by the first circuit and the second circuit. Thus, the limit of the negative pressure is relaxed.

An air conditioning apparatus according to a third aspect is the air conditioning apparatus according to the first aspect or the second aspect in which the air conditioning apparatus is operated at a condensation temperature of more than 70°C and less than or equal to 75°C in the outdoor heat exchanger.

The air conditioning apparatus according to the third aspect can realize an air conditioning apparatus dedicated to cooling and usable under a high outside air temperature.

An air conditioning apparatus according to a fourth aspect is the air conditioning apparatus according to any one of the first to third aspects in which the first refrigerant includes R1234ze.

In the air conditioning apparatus according to the fourth aspect, R1234ze is suitably used as the first refrigerant.

An air conditioning apparatus according to a fifth aspect is the air conditioning apparatus according to any one of the first to fourth aspects in which a saturated gas density of the first heat transfer medium at 6°C is more than or equal to 40 kg/m³.

In the air conditioning apparatus according to the fifth aspect, the heat transfer medium is suitably used for an air conditioning apparatus dedicated to cooling.

An air conditioning apparatus according to a sixth aspect is the air conditioning apparatus according to any one of the first to fifth aspects in which an enthalpy difference of the first heat transfer medium when an evaporation temperature is 6°C is more than or equal to 240 kJ/kg.

In the air conditioning apparatus according to the sixth aspect, the refrigerant is suitably used for an air conditioning apparatus dedicated to cooling.

An air conditioning apparatus according to a seventh aspect is the air conditioning apparatus according to the fifth aspect or the sixth aspect in which the first heat transfer medium includes carbon dioxide.

In the air conditioning apparatus according to the seventh aspect, carbon dioxide is suitably used as the first heat transfer medium.

An air conditioning apparatus according to an eighth aspect is the air conditioning apparatus according to any one of the first to seventh aspects in which the air conditioning apparatus is operated for cooling under an outside air temperature of more than 60°C.

The air conditioning apparatus according to the eighth aspect can be operated for cooling even under an outside air temperature more than 60°C.

### BRIEF DESCRIPTION OF THE DRAWINGS

Fig. 1 is a schematic diagram of a heat processing system according to a first embodiment of the present disclosure.
Fig. 2 is a schematic diagram of a heat processing system according to a second embodiment of the present disclosure.

### DESCRIPTION OF EMBODIMENTS

A heat processing system according to one embodiment of the present disclosure will be described with reference to the drawings.

### (1) First Embodiment

### (1-1) Overall Configuration

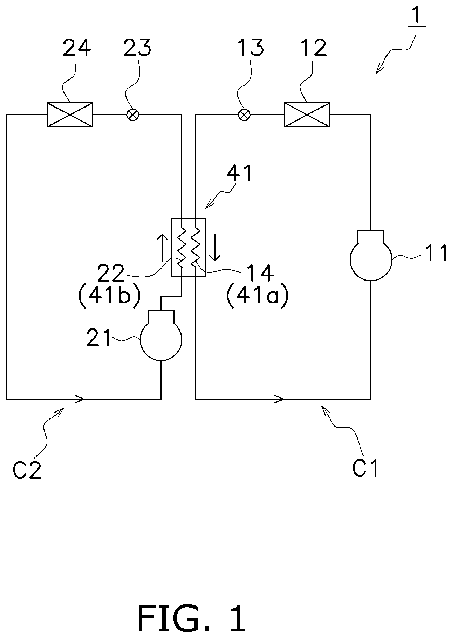

An air conditioning apparatus according to one embodiment of the present disclosure is an air conditioning apparatus dedicated to cooling. As illustrated in Fig. 1, an air conditioning apparatus 1 includes a first circuit C1 and a second circuit C2. In the present embodiment, the first circuit C1 is a heat-source-side circuit that generates heat that is to be supplied to a load-side cycle. The second circuit C2 is a load-side circuit to which heat required for cooling is supplied from the heat-source-side circuit.

The first circuit C1 has an outdoor heat exchanger 12 that cools a first refrigerant by outdoor air. In the second circuit C2, a first heat transfer medium cooled by exchanging heat with the first refrigerant that flows in the first circuit C1 flows. The second circuit C2 has an indoor heat exchanger 24 that cools indoor air by the first heat transfer medium. The first circuit C1 and the second circuit C2 share a first cascade heat exchanger 41.

### (1-2) Detailed Configuration

### (1-2-1) First Circuit

In the first circuit C1, the first refrigerant is circulated. The first refrigerant is a HFO refrigerant having a critical temperature higher than that of R32. The first refrigerant is, for example, R1234ze, R1234yf, or the like. The first refrigerant preferably contains R1234ze and is more preferably consists of R1234ze.

The first refrigerant is preferably a medium-pressure refrigerant or a low-pressure refrigerant. The "medium-pressure refrigerant" has a pressure of more than 0.8 MPa and less than or equal to 1.3 MPa at a condensation temperature of 25°C. The medium-pressure refrigerant is, for example, R1234ze(E). The "low-pressure refrigerant" has a pressure of more than 0.08 MPa and less than or equal to 0.8 MPa at a condensation temperature of 25°C. The low-pressure refrigerant is, for example, R1234ze(Z).

The first circuit C1 is a vapor compression refrigeration cycle. The first circuit C1 is a high-temperature refrigeration cycle on the high temperature side and is used here for an outdoor unit of the air conditioning apparatus 1.

In the first circuit C1, a first compressor 11, the outdoor heat exchanger 12, a first expansion valve 13, and a first evaporator 14 are sequentially connected by refrigerant pipes and constitute a refrigerant circuit.

The first compressor 11 sucks the first refrigerant that flows in the first circuit C1 and compresses and discharges the sucked first refrigerant as a gas refrigerant having a high temperature and a high pressure. In the present embodiment, the first compressor 11 is a compressor of a type capable of adjusting the discharge amount of refrigerant by controlling the number of rotations by an inverter circuit.

The outdoor heat exchanger 12 is a condenser that exchanges heat between outdoor air (outside air) and the first refrigerant that flows in the first circuit C1 and condenses and liquefies the first refrigerant. The outside air temperature is not limited. In the present embodiment, the outside air temperature is more than 60°C. Specifically, the outside air temperature is more than 60°C and less than or equal to 65°C. Operation is performed at a condensation temperature of more than 70°C and less than or equal to 75°C in the outdoor heat exchanger 12.

The first expansion valve 13 is an expansion valve that decompresses and expands the first refrigerant that flows in the first circuit C1. The first expansion valve 13 is, for example, an electronic expansion valve.

The first evaporator 14 is an evaporator that evaporates the first refrigerant that flows in the first circuit C1 by exchanging heat. In the present embodiment, the first evaporator 14 is constituted by a heat transfer tube and the like through which the first refrigerant that flows in the first circuit C1 passes in the first cascade heat exchanger 41. In the first cascade heat exchanger 41, heat is exchanged between the first refrigerant that flows in the first evaporator 14 and the first heat transfer medium that flows in the second circuit C2.

A heat-source-side cycle that is the first circuit C1 is disposed outdoors. Part of the first circuit C1 may be disposed outdoors. In this embodiment, the entirety of the first circuit C1 is disposed outdoors.

### (1-2-2) Second Circuit

In the second circuit C2, the first heat transfer medium is circulated. The first heat transfer medium is not limited and includes a refrigerant.

Specifically, the saturated gas density of the first heat transfer medium at 6°C is preferably more than or equal to 40 kg/m³ and more preferably more than or equal to 100 kg/m³. The higher the saturated gas density, the more the first heat transfer medium is used suitably for an air conditioning apparatus dedicated to cooling. The upper limit of the saturated gas density is, for example, 150 kg/m³. Examples of such a first heat transfer medium include carbon dioxide (CO₂), R466A, Amolea300Y, Amolea150Y4, and the like.

The enthalpy difference of the first heat transfer medium when the evaporation temperature is 6°C is preferably more than or equal to 240 kJ/kg. The enthalpy difference here denotes an enthalpy difference between a saturated gas and a saturated liquid. The higher the enthalpy difference, the more the first heat transfer medium is used suitably for an air conditioning apparatus dedicated to cooling. The upper limit of the enthalpy difference is, for example, 400 kJ/kg. Examples of such a first heat transfer medium include R32, R290, R717, R600, R600a, and the like.

The first heat transfer medium preferably includes carbon dioxide and more preferably consists of carbon dioxide. By using carbon dioxide as the first heat transfer medium, it is possible to reduce the diameter of a pipe that constitutes the second circuit C2.

The first heat transfer medium is preferably a high-pressure medium. The "high-pressure medium" has a pressure or more than 1.3 MPa at a condensation temperature of 25°C. The high-pressure medium is, for example, carbon dioxide.

The second circuit C2 is a low-temperature refrigeration cycle on the low temperature side and is used here for an indoor unit of the air conditioning apparatus 1.

In the second circuit C2, a second compressor 21, a second condenser 22, a second expansion valve 23, and the indoor heat exchanger 24 are sequentially connected by pipes and constitute a heat transfer medium circuit.

The second compressor 21 sucks the first heat transfer medium that flows in the second circuit C2 and compresses and discharges the sucked first heat transfer medium as a gas medium having a high temperature and a high pressure.

The second condenser 22 is a condenser that condenses the first heat transfer medium that flows in the second circuit C2 by exchanging heat. In the present embodiment, the second condenser 22 is constituted by a heat transfer tube and the like through which the first heat transfer medium that flows in the second circuit passes in the first cascade heat exchanger 41.

The second expansion valve 23 is an expansion valve that decompresses and expands the first heat transfer medium that flows in the second circuit C2. The second expansion valve 23 is, for example, an electronic expansion valve.

The indoor heat exchanger 24 is an evaporator that evaporates the first heat transfer medium that flows in the second circuit C2 by exchange heat. The indoor heat exchanger 24 thus heats the first heat transfer medium by indoor air.

### (1-2-3) First Cascade Heat Exchanger

The first circuit C1 and the second circuit C2 share the first cascade heat exchanger 41. In the first cascade heat exchanger 41, the first evaporator 14 and the second condenser 22 are configured integrally. In the first cascade heat exchanger 41, heat is exchanged between the first refrigerant that flows in the first evaporator 14 and the first heat transfer medium that flows in the second condenser 22.

The first cascade heat exchanger 41 has a heat absorption portion 41a and a heat radiation portion 41b. The heat absorption portion 41a is the first evaporator 14 of the first circuit C1. In the heat absorption portion 41a, the first refrigerant that circulates in the first circuit C1 absorbs heat from the heat transfer medium. The heat radiation portion 41b is the second condenser 22 of the second circuit C2. In the heat radiation portion 41b, the heat transfer medium that circulates in the second circuit C2 radiates heat into the first refrigerant.

### (1-3) Operation Action of Air Conditioning Apparatus

Next, an operation action of the air conditioning apparatus 1 will be described. In the present embodiment, cooling operation is performed under a high outside air temperature.

First, in the first circuit C1, the first refrigerant discharged from the first compressor 11 flows into the outdoor heat exchanger 12 serving as a first condenser. In the outdoor heat exchanger 12, the first refrigerant radiates heat into outside air and condenses. Here, operation is performed at a condensation temperature of more than 70°C and less than or equal to 75°C in the outdoor heat exchanger 12. After expanded in the first expansion valve 13, the first refrigerant absorbs heat from the first heat transfer medium and evaporates in the heat absorption portion41a (first evaporator 14) of the first cascade heat exchanger 41. Then, the first refrigerant is sucked by the first compressor 11. In the first circuit C1, the first refrigerant circulates as described above and repeats a compression process, a condensation process, an expansion process, and an evaporation process.

In the second circuit C2, the first heat transfer medium discharged from the second compressor 21 flows into the heat radiation portion 41b (second condenser 22) of the first cascade heat exchanger 41. In the second condenser 22, the first heat transfer medium radiates heat into the first refrigerant and condenses. After expanded in the second expansion valve 23, the first heat transfer medium absorbs heat from indoor air and evaporates in the indoor heat exchanger 24 and cools the indoor air. Then, the first heat transfer medium is sucked by the second compressor 21. The first heat transfer medium circulates as described above and repeats a compression process, a condensation process, an expansion process, and an evaporation process, thereby cooling the inside of a room.

### (1-4) Features

The air conditioning apparatus 1 according to the present embodiment is an air conditioning apparatus dedicated to cooling and including the first circuit C1 and the second circuit C2. The first circuit C1 has the outdoor heat exchanger 12 that cools the first refrigerant by outdoor air. In the second circuit C2, the first heat transfer medium cooled by exchanging heat with the first refrigerant that flows in the first circuit C1 flows. The first refrigerant is a HFO refrigerant having a critical temperature higher than that of R32.

In the present embodiment, a HFO refrigerant having a critical temperature higher than that of R32 is used as the first refrigerant that flows in the first circuit C1 on the high temperature side in the air conditioning apparatus 1 that has the first circuit C1 on the high temperature side and the second circuit C2 on the low temperature side. Consequently, it is possible to reduce the GWP.

The pressure of the HFO refrigerant having a critical temperature higher than that of R32 decreases when the outside air temperature decreases. In the present embodiment, however, instead of extending equipment to maintain the capacity, the HFO refrigerant having a critical temperature higher than that of R32 is used for the first circuit C1 on the heat source side of the air conditioning apparatus 1 dedicated to cooling. Consequently, it is possible to use the air conditioning apparatus 1 under a high outside air temperature.

Therefore, the air conditioning apparatus 1 according to the present embodiment can reduce the GWP and can be used under a high outside air temperature.

The air conditioning apparatus 1 dedicated to cooling does not use the HFO refrigerant having a critical temperature higher than that of R32 for heating operation and uses the HFO refrigerant under a high outside air temperature. Consequently, it is possible to suppress the pressure inside the first circuit C1 from becoming a negative pressure with respect to the pressure outside the first circuit C1. In addition, it is not necessary to extend equipment to be used in heating operation while maintaining the capacity. Consequently, it is possible to achieve downsizing of the air conditioning apparatus 1.

The air conditioning apparatus 1 according to the present embodiment is operated at a condensation temperature of more than 70°C and less than or equal to 75°C in the outdoor heat exchanger 12. The air conditioning apparatus 1 according to the present embodiment is operated for cooling under an outside air (outdoor air) temperature of more than 60°C. As described above, the air conditioning apparatus 1 according to the present embodiment is capable of sufficiently performing cooling (condensation) even when the outside air temperature around the outdoor heat exchanger 12 is more than 60°C. It is thus possible to realize the air conditioning apparatus 1 dedicated to cooling usable under a high outside air temperature.

In the present embodiment, the first refrigerant includes R1234ze. R1234ze is suitably used as the first refrigerant in the air conditioning apparatus 1 dedicated to cooling.

In the present embodiment, the saturated gas density of the first heat transfer medium at 6°C is more than or equal to 40 kg/m³. In the present embodiment, the enthalpy difference of the first heat transfer medium when the evaporation temperature is 6°C is more than or equal to 240 kJ/kg. These heat transfer mediums are suitably used for the air conditioning apparatus 1 dedicated to cooling.

When the first refrigerant is R1234ze and the first heat transfer medium is carbon dioxide, the first refrigerant and the first heat transfer medium are suitably used for the air conditioning apparatus 1 dedicated to cooling.

### (2) Second Embodiment

### (2-1) Overall Configuration

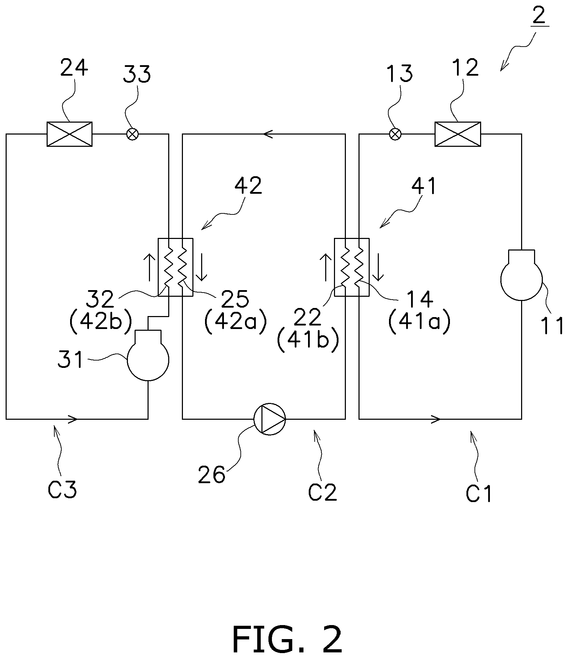

As illustrated in Fig. 2, an air conditioning apparatus 2 according to the second embodiment further includes a third circuit C3. The air conditioning apparatus 2 according to the present embodiment thus includes the first circuit C1, the second circuit C2, and the third circuit C3. In the present embodiment, the first circuit C1 and the second circuit C2 are each a heat-source-side circuit that generates heat that is to be supplied to the load-side cycle. The third circuit C3 is a load-side circuit to which heat required for cooling is supplied from the heat-source-side circuit.

The first circuit C1 has the outdoor heat exchanger 12 that cools the first refrigerant by outdoor air. In the second circuit C2, the first heat transfer medium cooled by exchanging heat with the first refrigerant that flows in the first circuit C1 flows. In the third circuit C3, a second refrigerant or a second heat transfer medium that is cooled by exchanging heat with the first heat transfer medium that flows in the second circuit C2 flows. The third circuit C3 has the indoor heat exchanger 24 that cools indoor air by the second refrigerant or the second heat transfer medium.

The first circuit C1 and the second circuit C2 share the first cascade heat exchanger 41. The second circuit C2 and the third circuit C3 share a second cascade heat exchanger 42. (2-2) Detailed Configuration

### (2-2-1) First Circuit

As in the first embodiment, a HFO refrigerant having a critical temperature higher than that of R32 circulates as the first refrigerant in the first circuit C1. The first circuit C1 is the same as that in the first embodiment. Description thereof is thus not repeated.

### (2-2-2) Second Circuit

As in the first embodiment, the first heat transfer medium circulates in the second circuit C2. The second circuit C2 according to the present embodiment, however, does not have an indoor heat exchanger. In the second circuit C2, the second condenser 22, a second evaporator 25, and a circulation pump 26 are sequentially connected by pipes and constitute a heat transfer medium circuit. The second condenser 22 is the same as that in the first embodiment.

The second evaporator 25 is an evaporator that evaporates the first heat transfer medium that flows in the second circuit C2 by exchanging heat. In the present embodiment, the second evaporator 25 is constituted by a heat transfer tube and the like through which the first heat transfer medium that flows in the second circuit C2 passes in the second cascade heat exchanger 42. In the second cascade heat exchanger 42, heat is exchanged between the first heat transfer medium that flows in the second circuit C2 and the second refrigerant or the second heat transfer medium that flows in the third circuit C3.

The circulation pump 26 causes the first heat transfer medium to circulate in the second circuit C2.

### (2-2-3) Third Circuit

In the third circuit C3, the second refrigerant or the second heat transfer medium circulates. The second refrigerant or the second heat transfer medium differs from the first refrigerant and the first heat transfer medium from each other. The second refrigerant is, for example, R32, R454C, or R466A. The second heat transfer medium is, for example, water or brine.

The third circuit C3 is a low-temperature refrigeration cycle on the low temperature side and is used here for an indoor unit of the air conditioning apparatus 2.

In the third circuit C3, a third compressor 31, a third condenser 32, a third expansion valve 33, and the indoor heat exchanger 24 are sequentially connected by pipes and constitute a refrigerant circuit or a heat-transfer-medium transfer circuit.

The third compressor 31 sucks the second refrigerant or the second heat transfer medium that flows in the third circuit C3 and compresses and discharges the sucked second refrigerant or the sucked second heat transfer medium as a gas refrigerant or a gas medium having a high temperature and a high pressure.

The third condenser 32 is a condenser that condenses the second refrigerant or the second heat transfer medium that flows in the third circuit C3 by exchanging heat. In the present embodiment, the third condenser 32 is constituted by a heat transfer tube and the like through which the second refrigerant or the second heat transfer medium that flows in the third circuit C3 passes in the second cascade heat exchanger 42.

The third expansion valve 33 is an expansion valve that decompresses and expands the second refrigerant or the second heat transfer medium that flows in the third circuit C3. The third expansion valve 33 is, for example, an electronic expansion valve.

The indoor heat exchanger 24 is an evaporator that evaporates the second refrigerant or the second heat transfer medium that flows in the third circuit C3 by exchanging heat. In the present embodiment, the indoor heat exchanger 24 exchanges heat between indoor air and the second refrigerant or the second heat transfer medium.

### (2-2-4) First Cascade Heat Exchanger

As in the first embodiment, in the first cascade heat exchanger 41, heat is exchanged between the first refrigerant and the first heat transfer medium. The first cascade heat exchanger 41 is the same as that in the first embodiment. Description thereof is thus not repeated.

### (2-2-5) Second Cascade Heat Exchanger

The second circuit C2 and the third circuit C3 share the second cascade heat exchanger 42. In the second cascade heat exchanger 42, the second evaporator 25 and the third condenser 32 are configured integrally. In the second cascade heat exchanger 42, heat is exchanged between the first heat transfer medium that flows in the second evaporator 25 and the second refrigerant or the second heat transfer medium that flows in the third condenser 32.

The second cascade heat exchanger 42 has a heat absorption portion 42a and a heat radiation portion 42b. The heat absorption portion 42a is the second evaporator 25 of the second circuit C2. In the heat absorption portion 42a, the first heat transfer medium that circulates in the second circuit C2 absorbs heat from the second refrigerant or the second heat transfer medium. The heat radiation portion 42b is the third condenser 32 of the third circuit C3. In the heat radiation portion 42b, the second refrigerant or the second heat transfer medium that circulates in the third circuit C3 radiates heat into the first heat transfer medium.

### (2-3) Operation Action of Air Conditioning Apparatus

Next, an operation action of the air conditioning apparatus 2 will be described. In the present embodiment, cooling operation is performed under a high outside air temperature.

First, in the first circuit C1, the first refrigerant discharged from the first compressor 11 flows into the outdoor heat exchanger 12 and radiates heat into outside air and condenses in the outdoor heat exchanger 12. After expanded in the first expansion valve 13, the first refrigerant absorbs heat from the first heat transfer medium and evaporates in the first evaporator 14 of the first cascade heat exchanger 41. Then, the first refrigerant is sucked by the first compressor 11. In the first circuit C1, the first refrigerant circulates as described above and repeats a compression process, a condensation process, an expansion process, and an evaporation process.

In the second circuit C2, the first heat transfer medium discharged from the circulation pump 26 radiates heat into the first refrigerant and is cooled in the heat radiation portion 41b (second condenser 22) of the first cascade heat exchanger 41. The cooled first heat transfer medium absorbs heat from the second refrigerant or the second heat transfer medium and is heated in the heat absorption portion 42a (second evaporator 25) of the second cascade heat exchanger 42. The heated first heat transfer medium flows into the heat radiation portion 41b of the first cascade heat exchanger 41 via the circulation pump 26. In the second circuit C2, the first heat transfer medium circulates as described above and repeats a cooling process and a heating process.

In the third circuit C3, the second refrigerant or the second heat transfer medium discharged from the third compressor 31 flows into the heat radiation portion 42b (third condenser 32) of the second cascade heat exchanger 42. In the third condenser 32, the second refrigerant or the second heat transfer medium radiates heat into the first heat transfer medium and condenses. After expanded in the third expansion valve 33, the second refrigerant or the second heat transfer medium absorbs heat from indoor air and evaporates in the indoor heat exchanger 24, and cools indoor air. Then, the second refrigerant or the second heat transfer medium is sucked by the third compressor 31. The second refrigerant or the second heat transfer medium circulates as described above and repeats a compression process, a condensation process, an expansion process, and an evaporation process, thereby cooling the inside of a room.

### (2-4) Features

The air conditioning apparatus 1 according to the present embodiment further includes the third circuit C3 in which the second refrigerant or the second heat transfer medium that is cooled by exchanging heat with the first heat transfer medium that flows in the second circuit C2 flows. Consequently, it is possible to realize the air conditioning apparatus 2 including a ternary circuit in which a heat source machine is constituted by the first circuit C1 and the second circuit C2. Therefore, the limit of the negative pressure inside the first circuit C1 is relaxed.

### (3) Modifications

In the above-described first embodiment, the air conditioning apparatus 1 including the first circuit C1 and the second circuit C2 has been described as an example. In the above-described second embodiment, the air conditioning apparatus 2 including the first circuit C1, the second circuit C2, and the third circuit C3 has been described as an example. The air conditioning apparatus according to the present disclosure may include four or more circuits.

Embodiments of the present disclosure have been described above; however, it should be understood that various changes in the forms and details are possible without departing from the gist and the scope of the present disclosure described in the claims.

### REFERENCE SIGNS LIST

1, 2 air conditioning apparatus
11, 21, 31 compressor
12 outdoor heat exchanger
13, 23, 33 expansion valve
14, 25 evaporator
22, 32 condenser
24 indoor heat exchanger
26 circulation pump
41, 42 cascade heat exchanger
C1 first circuit
C2 second circuit
C3 third circuit

### CITATION LIST

### PATENT LITERATURE

PTL 1: International Publication No. 2015/083834

## Claims

1. An air conditioning apparatus (1, 2) dedicated to cooling, comprising:
a first circuit (C1) having an outdoor heat exchanger (12) that cools a first refrigerant by outdoor air; and
a second circuit (C2) in which a first heat transfer medium that is cooled by exchanging heat with the first refrigerant that flows in the first circuit flows,
wherein the first refrigerant is a HFO refrigerant having a critical temperature higher than a critical temperature of R32.

2. The air conditioning apparatus (2) according to claim 1, further comprising:
a third circuit (C3) in which a second refrigerant or a second heat transfer medium that is cooled by exchanging heat with the first heat transfer medium that flows in the second circuit flows.

3. The air conditioning apparatus according to claim 1 or claim 2, wherein the air conditioning apparatus is operated at a condensation temperature of more than 70°C and less than or equal to 75°C in the outdoor heat exchanger.

4. The air conditioning apparatus according to any one of claims 1 to 3, wherein the first refrigerant includes R1234ze.

5. The air conditioning apparatus according to any one of claims 1 to 4, wherein a saturated gas density of the first heat transfer medium at 6°C is more than or equal to 40 kg/m³.

6. The air conditioning apparatus according to any one of claims 1 to 5, wherein an enthalpy difference of the first heat transfer medium when an evaporation temperature is 6°C is more than or equal to 240 kJ/kg.

7. The air conditioning apparatus according to claim 5 or claim 6, wherein the first heat transfer medium includes carbon dioxide.

8. The air conditioning apparatus according to any one of claims 1 to 7, wherein the air conditioning apparatus is operated for cooling under an outside air temperature of more than 60°C.
